# EUROPEAN PATENT APPLICATION

(11) **EP 3 006 741 A1**
(43) Date of publication of application: **13.04.2016**
(21) Application number: 15188305.5
(22) Date of filing: 05.10.2015
(51) Int. Cl.: F04D 13/02, F04D 29/044, F16D 1/00, F04D 29/12

(54) **TURBOPUMP WITH SHAFT COUPLING**

(30) Priority: 09.10.2014 JP 2014207955; 26.12.2014 JP 2014265635; 25.06.2015 JP 2015127490
(71) Applicant: EBARA CORPORATION, Ohta-ku, Tokyo (JP)
(72) Inventor: WATANABE, Masaki, Tokyo (JP); KAWASAKI, Hiroyuki, Tokyo (JP); YAMANAKA, Takashi, Tokyo (JP)
(74) Representative: Wagner, Karl H.

(57) **Abstract**

A turbopump which can use a main shaft having high general versatility for connection with a shaft coupling without causing the main shaft to drop even in a pump in which a large axial thrust force is generated, and can facilitate replacement work of a mechanical seal is disclosed. The turbopump includes a mechanical seal provided in a portion where the main shaft passes through a pump casing, and a pump-side shaft coupling, a motor-side shaft coupling, and a spacer which are configured to connect the main shaft and a motor shaft of a motor, the spacer being interposed between the pump-side shaft coupling and the motor-side shaft coupling. A groove is formed in an outer circumferential surface of the main shaft, a female screw is formed in the pump-side shaft coupling, and a bolt is screwed into the female screw to fit a tip end of the bolt into the groove.

## Description

### BACKGROUND OF THE INVENTION

### Field of the Invention:

The present invention relates to a turbopump, and more particularly to a turbopump having a mechanical seal in a portion where a main shaft for supporting an impeller passes through a pump casing.

### Description of the Related Art:

In a turbopump for imparting energy to a liquid by rotating an impeller in a pump casing, a mechanical seal as a shaft sealing device is widely used in a portion where a main shaft for supporting the impeller passes through the pump casing.

In some centrifugal pumps which are one type of turbopump, a dual-split coupling structure is employed to provide a mechanical seal replacement space for replacing a mechanical seal without removing an electric motor at the time of maintenance (Patent document 1).

The dual-split coupling structure tends to be long, large and heavy in order to make itself rigid enough, and workability and assemblability become worse in the large-output type of pump because the coupling is heavy. Further, the dual-split coupling structure is difficult to achieve concentricity and perpendicularity, leading to a high manufacturing cost. If a dual-split coupling is manufactured at a realistic manufacturing cost, sufficient concentricity and perpendicularity cannot be achieved, thus making vibration and noise of the pump larger due to the lack of concentricity and perpendicularity. Due to overhang of a pump impeller, if a dual-split coupling is employed, it becomes necessary to provide a submerged bearing structure at a tip end of the main shaft.

As described above, the dual-split coupling structure as disclosed in Patent document 1 has various problems in terms of workability, assemblability, and performance.

As a structure which is free of the problems of the above dual-split coupling structure and is capable of replacing a mechanical seal without removing an electric motor at the time of maintenance, Patent document 2 discloses a pump in which a pump-side shaft coupling is fixed to a pump shaft for supporting an impeller, and a motor-side shaft coupling is fixed to a motor shaft of a motor, with a spacer interposed between the pump-side shaft coupling and the motor-side shaft coupling.

### Citation List

### Patent Literature

(Patent document 1) Japanese Laid-open Patent Publication No. 2007-205360
(Patent document 2) Japanese Laid-open Patent Publication No. 59-138794

### SUMMARY OF THE INVENTION

The inventors of the present invention have intensively studied the coupling structure in which the spacer is interposed between the pump-side shaft coupling and the motor-side shaft coupling as disclosed in Patent document 2, and have found that this coupling structure has the following problems.
(1) Since the shaft coupling and the main shaft are not fixed together by setscrews or the like, when the coupling structure is used in a pump that tends to generate a large axial thrust force, the main shaft may be pulled in an axial direction and fall out of the shaft coupling, possibly causing the pump to be inoperable.
(2) The manufacturing cost of the parts becomes high because special main shafts are used for connection with the shaft couplings at the motor side and at the pump side. Further, since the motor has to be a dedicated motor rather than a general-purpose motor, the manufacturing cost of the motor is liable to be high.
(3) When the spacer in the intermediate part is to be removed, the main shaft has to be dropped by a distance equal to or larger than the fitting engagement between the spacer and the shaft coupling. Therefore, this coupling structure cannot be employed in a pump in which there is not enough falling space in structure for a rotor including the main shaft and the impeller.

The present invention has been made in view of the above circumstances. It is therefore an object of the present invention to provide a turbopump which can use a main shaft having high general versatility for connection with a shaft coupling without causing the main shaft to drop even in a pump in which a large axial thrust force is generated, and can facilitate replacement work of a mechanical seal.

In order to achieve the above object, according to a first aspect of the present invention, there is provided a turbopump comprising: a main shaft configured to support an impeller; a pump casing configured to house the impeller; a mechanical seal provided in a portion where the main shaft passes through the pump casing; and a pump-side shaft coupling, a motor-side shaft coupling, and a spacer which are configured to connect the main shaft and a motor shaft of a motor, the spacer being interposed between the pump-side shaft coupling and the motor-side shaft coupling; wherein a groove is formed in an outer circumferential surface of the main shaft, a female screw is formed in the pump-side shaft coupling, and a bolt is screwed into the female screw to fit a tip end of the bolt into the groove.

According to the present invention, the pump-side shaft coupling and the main shaft are axially fixed to each other using the bolt and the groove, and thus the main shaft can be prevented from falling out of the pump-side shaft coupling. Therefore, the present coupling structure comprising the pump-side shaft coupling, the motor-side shaft coupling, and the spacer can be employed even in a pump that undergoes a high axial thrust force. Specifically, since the bolt is fitted into the groove formed in the main shaft, the bolt is caught (or engaged) by an upper end of the groove of the main shaft, thus preventing the main shaft from falling out of the pump-side shaft coupling due to an axial thrust force. The number of bolts used may be increased depending on the axial thrust force that is applied, or the bolt may be increased in size.

In a preferred aspect of the present invention, the groove comprises a circumferential groove extending in a circumferential direction of the main shaft.

In a preferred aspect of the present invention, the groove comprises a round groove having a circular cross-section or an elliptical cross-section, or a polygonal groove having a polygonal cross-section.

The round groove according to the present invention can receive a larger axial thrust force because the area of contact between the groove and a fixing screw or bolt is increased to reduce the surface pressure.

In a preferred aspect of the present invention, the tip end of the bolt is brought into contact with the bottom of the groove.

According to the present invention, since the tip end of the bolt is brought into contact with the bottom of the groove when the pump-side shaft coupling and the main shaft are fixed to each other, the outer circumferential surface of the main shaft is prevented form being damaged. Therefore, when the pump-side shaft coupling is installed on and removed from the main shaft, the pump-side shaft coupling is prevented from being galled, and hence the pump-side shaft coupling can repeatedly be installed on and removed from the main shaft with ease.

In a preferred aspect of the present invention, a counterbore hole is formed in a portion where the female screw is formed in the pump-side shaft coupling, the counterbore hole being configured to house a head of the bolt.

In a preferred aspect of the present invention, when the tip end of the bolt is brought into contact with the bottom of the groove, an end face of the head of the bolt and an outer circumferential surface of the pump-side shaft coupling that surrounds the counterbore hole become substantially flush with each other.

According to the present invention, when the tip end of the bolt is not fitted in the groove of the pump shaft, i.e., when the bolt is not inserted correctly in the groove, the end face of the bolt head bulges (projects) from the outer circumferential surface of the pump-side shaft coupling. Therefore, the worker can easily recognize the state in which the pump shaft and the pump-side shaft coupling are not assembled properly. Consequently, the improper assembling of the pump shaft and the pump-side shaft coupling can be prevented.

In a preferred aspect of the present invention, the tip end portion of the bolt fitted into the groove comprises an unthreaded smooth cylinder.

When an axial thrust force is applied to the pump shaft and the applied axial thrust force cannot be borne only by the frictional force on the tip end face of the bolt, the upper end face of the groove and the tip end portion of the bolt are held in contact with each other. In this case, if the bolt is fully threaded, the screw thread of the bolt may be deformed in shape due to the contact between the upper end face of the groove and the screw thread. Further, if attempts are made to remove the bolt while the screw thread is being held in contact with the upper end face of the groove, the bolt and the female screw of the pump-side shaft coupling may be galled. According to the present invention, the above deformation or galling can be prevented from occuring because the smooth outer circumferential surface of the tip end of the bolt is held in contact with the upper end face of the groove.

In a preferred aspect of the present invention, the groove has an inlet corner having a chamfering or a tapered shape.

According to the present invention, the chamfering or the tapered shape of the inlet corner of the groove allows the bolt to be inserted easily into the groove.

In a preferred aspect of the present invention, the tip end of the bolt has a corner having a chamfering or a tapered shape.

According to the present invention, the chamfering or the tapered shape of the corner of the tip end of the bolt allows the bolt to be inserted easily into the female screw.

According to a second aspect of the present invention, there is provided a turbopump comprising: a main shaft configured to support an impeller; a pump casing configured to house the impeller; a mechanical seal provided in a portion where the main shaft passes through the pump casing; and a pump-side shaft coupling, a motor-side shaft coupling, and a spacer which are configured to connect the main shaft and a motor shaft of a motor, the spacer being interposed between the pump-side shaft coupling and the motor-side shaft coupling; wherein a female screw is formed in the main shaft in a direction perpendicular to an axial direction of the main shaft, a through hole is formed in the pump-side shaft coupling, and a bolt is inserted through the through hole and screwed into the female screw.

According to the present invention, the pump-side shaft coupling and the main shaft are axially fixed to each other using the bolt, and thus the main shaft can be prevented from falling out of the pump-side shaft coupling. Therefore, the present coupling structure comprising the pump-side shaft coupling, the motor-side shaft coupling, and the spacer can be employed even in a pump that undergoes a high axial thrust force. Specifically, since the main shaft and the pump-side shaft coupling are fastened together by the bolt, an axial thrust force can be borne by the bolt having high strength, so that the main shaft can be prevented from falling out of the pump-side shaft coupling.

According to a third aspect of the present invention, there is provided a turbopump comprising: a main shaft configured to support an impeller; a pump casing configured to house the impeller; a mechanical seal provided in a portion where the main shaft passes through the pump casing; and a pump-side shaft coupling, a motor-side shaft coupling, and a spacer which are configured to connect the main shaft and a motor shaft of a motor, the spacer being interposed between the pump-side shaft coupling and the motor-side shaft coupling; wherein a through hole is formed in the main shaft in a direction perpendicular to an axial direction of the main shaft, a through hole is formed in the pump-side shaft coupling, and a pin is inserted through both the through holes.

According to the present invention, the pump-side shaft coupling and the main shaft are axially fixed to each other using the pin, and thus the main shaft can be prevented from falling out of the pump-side shaft coupling. Therefore, the present coupling structure comprising the pump-side shaft coupling, the motor-side shaft coupling, and the spacer can be employed even in a pump that undergoes a high axial thrust force. Specifically, since the main shaft and the pump-side shaft coupling are interconnected by the inserted (or press-fitted) pin, an axial thrust force can be borne by the pin having high strength, so that the main shaft can be prevented from falling out of the pump-side shaft coupling.

In a preferred aspect of the present invention, a key is interposed between the pump-side shaft coupling and the main shaft.

In a preferred aspect of the present invention, a key is interposed between the motor-side shaft coupling and the motor shaft.

In a preferred aspect of the present invention, a female screw is formed in at least one of the pump-side shaft coupling and the motor-side shaft coupling at a position corresponding to the key, and a bolt is screwed into the female screw to bring a tip end of the bolt into contact with the key.

According to the present invention, the bolt is screwed into the female screw of the pump-side shaft coupling or the motor-side shaft coupling, and the bolt is tightened so that the tip end of the bolt is brought into contact with the key with strong force. Therefore, the pump-side shaft coupling or the motor-side shaft coupling is fixed so as not to move in an axial direction with respect to the main shaft or the motor shaft. Because the tip end of the bolt is brought into contact with the key, the outer circumferential surface of the main shaft or the motor shaft can be prevented from being damaged at the time of fixation.

In a preferred aspect of the present invention, a retaining ring for positioning the pump-side shaft coupling is mounted on the main shaft.

In a preferred aspect of the present invention, a dual-split ring for positioning the pump-side shaft coupling is mounted on the main shaft, and a retaining ring is fitted over a cylindrical portion of the pump-side shaft coupling and the dual-split ring.

According to the present invention, at the time of operation, the retaining ring is fitted over the dual-split ring, so that the outer circumferential surface of the dual-split ring is held in close contact with the inner circumferential surface of the retaining ring. Thus, the dual-split ring is secured by the retaining ring. At the time of disassembling, the retaining ring is slid upwardly along the cylindrical portion of the pump-side shaft coupling, so that the dual-split ring is freed. Since the dual-split ring is made up of two split halves, the dual-split ring can simply be removed radially outwardly even in the absence of enough space. After removing the dual-split ring, the pump-side shaft coupling is slid downwardly along the main shaft, so that the spacer can be removed. Thus, the cartridge mechanical seal can be removed without removal of the motor-side shaft coupling.

In a preferred aspect of the present invention, a female screw is formed in the cylindrical portion of the pump-side shaft coupling in a direction perpendicular to an axial direction of the main shaft, a through hole is formed in the retaining ring, and a bolt is inserted through the through hole and screwed into the female screw.

According to the present invention, the retaining ring can be fixed to the pump-side shaft coupling using the bolt.

In a preferred aspect of the present invention, a step is formed in an inner circumferential portion of the pump-side shaft coupling, a plate is placed on the step, and a bolt extending in an axial direction of the main shaft is inserted through a through hole formed in the plate and is screwed into a female screw formed in an upper end portion of the main shaft.

According to the present invention, the plate is placed on the step in the inner circumferential portion of the pump-side shaft coupling, and the bolt extending in an axial direction of the main shaft is inserted through the through hole formed in the plate and screwed into the female screw formed in the upper end portion of the main shaft. Therefore, an axial force can be borne by the bolt and the plate, and thus the main shaft can be prevented from falling out of the pump-side shaft coupling. Therefore, the present coupling structure comprising the pump-side shaft coupling, the motor-side shaft coupling, and the spacer can be employed even in a pump that undergoes a high axial thrust force.

In a preferred aspect of the present invention, fit portions of at least one of the pump-side shaft coupling and the motor-side shaft coupling, and the spacer are formed inside the radially outermost portions of the at least one of the pump-side shaft coupling and the motor-side shaft coupling, and the spacer.

According to the present invention, the fit portions of the parts are not positioned in the radially outermost portions, and hence are less liable to be scratched or dented in error when the parts are individually kept in storage.

In a preferred aspect of the present invention, when the mechanical seal is replaced, a fastener having a screw which interconnects the spacer and the pump-side shaft coupling is unfastened to allow a rotor including the impeller, the main shaft, and the pump-side shaft coupling to drop, and after replacement of the mechanical seal, the fastener is fastened to lift the rotor back to a normal position of the rotor.

According to the present invention, the rotor including the impeller, the main shaft, and the pump-side shaft coupling can be lifted back to its normal position only by tightening the fastener including a bolt and a nut, etc. after replacement of the mechanical seal, thus providing excellent workability.

The present invention offers the following advantages.
(1) The mechanical seal can be replaced only by removing the pump-side shaft coupling and the intermediate spacer without removal of the motor and the motor-side shaft coupling.
(2) Since the shaft coupling and the main shaft (pump shaft) are fixed to each other by a setscrew or a bolt or a pin, the main shaft is prevented from falling out of the shaft coupling even in a pump that undergoes a large axial thrust force, and hence the pump is free of the danger of an operation failure due to dropping of the main shaft.
(3) Both of the motor side and the pump side can use a main shaft having high general versatility for connection with the shaft coupling. Further, the motor can use a general-purpose product, thus reducing the manufacturing cost of the pump.
(4) When the spacer in the intermediate region between the motor-side shaft coupling and the pump-side shaft coupling is to be removed, the main shaft (pump shaft) is allowed to drop and the pump-side shaft coupling is allowed to be displaced downwardly in order to provide a space corresponding to the fit between the spacer and the shaft coupling and also to allow the spacer to be removed laterally with enough room. Consequently, the present coupling structure comprising the pump-side shaft coupling, the motor-side shaft coupling, and the spacer can be employed even in a pump in which there is not enough falling space for the rotor including the main shaft and the impeller.
(5) When the shaft coupling is fixed to the main shaft (pump shaft), the outer circumferential surface of the main shaft can be prevented from being damaged, and the shaft coupling can easily be removed, thus facilitating the replacement work of the mechanical seal.
(6) The pump-side shaft coupling and the main shaft are firmly coupled to each other by the plate and the bolt, and are capable of withstanding excessive axial loads.
(7) Since the lower end of the pump-side shaft coupling is fixed by the dual-split ring, attachment and removal of the pump-side shaft coupling can be simple. Specifically, at the time of operation, the retaining ring is fitted over the dual-split ring, so that the outer circumferential surface of the dual-split ring is held in close contact with the inner circumferential surface of the retaining ring. Thus, the dual-split ring is secured by the retaining ring. At the time of disassembling, the retaining ring is slid upwardly along the cylindrical portion of the pump-side shaft coupling, so that the dual-split ring is freed. Since the dual-split ring is made up of two split halves, the dual-split ring can simply be removed radially outwardly even in the absence of enough space. After removing the dual-split ring, the pump-side shaft coupling is slid downwardly along the main shaft, so that the spacer can be removed. Thus, the cartridge mechanical seal can be removed without removal of the motor-side shaft coupling.
(8) When the tip end of the bolt is not fitted in the groove of the pump shaft, i.e., when the bolt is not inserted correctly in the groove, the end face of the bolt head bulges (projects) from the outer circumferential surface of the pump-side shaft coupling. Therefore, the worker can easily recognize the state in which the pump shaft and the pump-side shaft coupling are not assembled properly. Consequently, the improper assembling of the pump shaft and the pump-side shaft coupling can be prevented.

### BRIEF DESCRIPTION OF THE DRAWINGS

FIG. 1 is a cross-sectional view showing a turbopump according to an embodiment of the present invention;
FIG. 2 is a schematic cross-sectional view showing an example of a structure in which a motor shaft and a motor-side shaft coupling are fixed to each other in the turbopump shown in FIG. 1;
FIG. 3 is a schematic cross-sectional view showing an example of a structure in which a pump shaft and a pump-side shaft coupling are fixed to each other in the turbopump shown in FIG. 1;
FIG. 4 is a schematic cross-sectional view showing another example of a structure in which the pump shaft and the pump-side shaft coupling are fixed to each other in the turbopump shown in FIG. 1;
FIG. 5 is a schematic cross-sectional view showing still another example of a structure in which the pump shaft and the pump-side shaft coupling are fixed to each other in the turbopump shown in FIG. 1;
FIG. 6 is a schematic cross-sectional view showing still another example of a structure in which the pump shaft and the pump-side shaft coupling are fixed to each other in the turbopump shown in FIG. 1;
FIGS. 7A, 7B, 7C, and 7D are views showing details of groove formed in the pump shaft shown in FIG. 6, FIG. 7A is a front elevational view of an example of the groove, FIG. 7B is a cross-sectional view of another example of the groove, and FIGS. 7C, 7D are views as viewed from an arrow A in FIG. 7B;
FIG. 8 is a schematic cross-sectional view showing details of a fit portion of the motor-side shaft coupling and the spacer in the turbopump shown in FIG. 1;
FIG. 9 is a schematic cross-sectional view showing details of a fit portion of the motor-side shaft coupling and the spacer in the turbopump shown in FIG. 1;
FIG. 10A is a schematic cross-sectional view showing an initial state (normal state) before a mechanical seal is replaced, and FIG. 10B is a schematic cross-sectional view showing a process of releasing the fixation of the pump-side shaft coupling and the spacer in the procedure for replacing the mechanical seal;
FIG. 11A is a schematic cross-sectional view showing a process of removing the spacer in the procedure for replacing the mechanical seal, and FIG. 11B is a schematic cross-sectional view showing a process of removing the pump-side shaft coupling from the pump shaft;
FIG. 12 is a schematic cross-sectional view showing a process of removing the mechanical seal from the pump shaft in the procedure for replacing the mechanical seal;
FIG. 13A is a schematic cross-sectional view showing a process of installing a mechanical seal on the pump shaft in the procedure for replacing the mechanical seal, and FIG. 13B is a schematic cross-sectional view showing a process of installing the pump-side shaft coupling on the pump shaft;
FIG. 14A is a schematic cross-sectional view showing a process of fixing the pump-side shaft coupling and the pump shaft to each other in the procedure for replacing the mechanical seal, and FIG. 14B is a schematic cross-sectional view showing a process of placing the spacer between the pump-side shaft coupling and the motor-side shaft coupling;
FIG. 15A is a schematic cross-sectional view showing a process of fixing the motor-side shaft coupling and the spacer to each other in the procedure for replacing the mechanical seal, and FIG. 15B is a schematic cross-sectional view showing a process of coupling the pump-side shaft coupling and the spacer to each other;
FIG. 16A is a schematic plan view of a C-shaped retaining ring, and FIGS. 16B and 16C are schematic cross-sectional views showing working processes for removing the C-shaped retaining ring from the pump shaft;
FIG. 17A is a schematic cross-sectional view showing an example of a structure in which a dual-split ring for positioning the pump-side shaft coupling axially with respect to the pump shaft is mounted on the pump-side shaft coupling, and FIG. 17B is a view showing the dual-split ring and a retaining ring for securing the dual-split ring;
FIGS. 18A and 18B are schematic cross-sectional views showing operating state and disassembling state of the positioning structure of the pump-side shaft coupling which uses the dual-split ring having the structure shown in FIG. 17A, and FIG. 18A shows the operating state of the positioning structure and FIG. 18B shows the disassembling state of the positioning structure;
FIG. 19A is a schematic cross-sectional view showing a normal assembling state of the pump shaft and the pump-side shaft coupling, and FIG. 19B is a schematic cross-sectional view showing the state in which the pump shaft and the pump-side shaft coupling are not assembled properly because the fixing bolt is not placed in the groove of the pump shaft;
FIG. 20 is a schematic cross-sectional view showing an example of the fixing bolt that is used in the embodiment shown in FIGS. 19A and 19B; and
FIGS. 21A and 21B are views showing an example of the groove of the pump shaft that is used in the embodiment shown in FIGS. 19A and 19B, and FIG. 21A is a schematic cross-sectional view showing the pump shaft and the pump-side shaft coupling and FIG. 21B is a side elevational view of the pump shaft having the groove.

### DESCRIPTION OF EMBODIMENTS

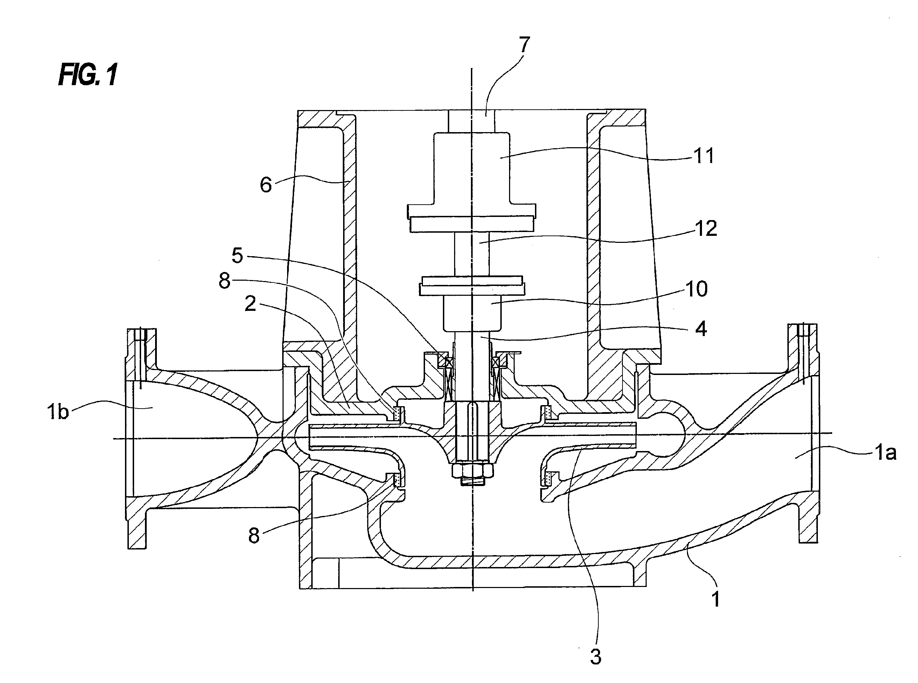

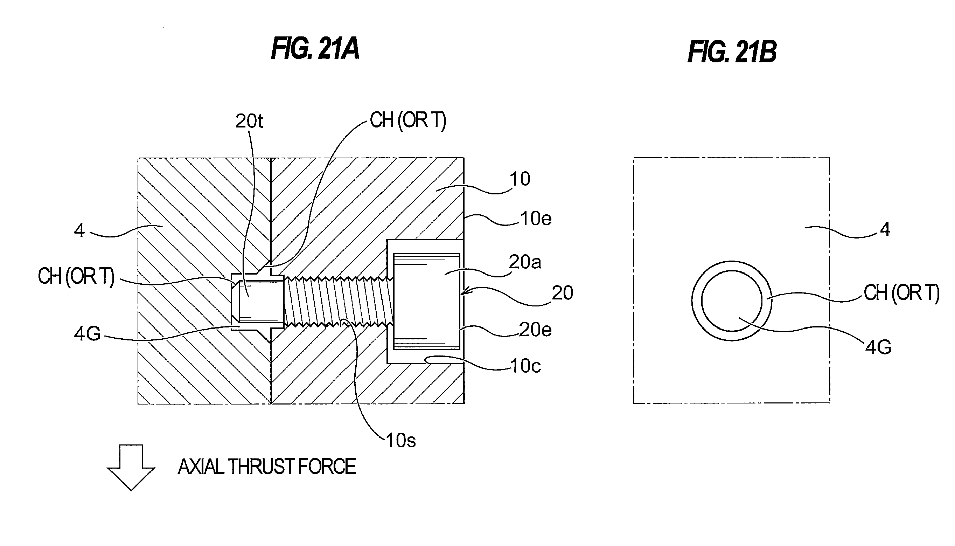

A turbopump according to embodiments of the present invention will be described below with reference to FIGS. 1 through 21A, 21B. Like or corresponding structural elements are denoted by like or corresponding reference numerals in FIGS. 1 through 21A, 21B and will not be described below in duplication.

FIG. 1 is a cross-sectional view showing a turbopump according to an embodiment of the present invention. As shown in FIG. 1, the turbopump includes a casing 1 having a suction port 1a and a discharge port 1b, and a casing cover 2 fixed to the casing 1. The casing 1 and the casing cover 2 make up a pump casing in which an impeller 3 is disposed.

As shown in FIG. 1, the impeller 3 is supported by a pump shaft (main shaft) 4. A mechanical seal 5 as a shaft sealing device is provided in a portion where the pump shaft 4 passes through the casing cover 2 that makes up the pump casing. A motor base 6 for supporting a motor (not shown) thereon is mounted on the casing cover 2. In FIG. 1, although the motor is omitted from illustration, a motor shaft 7 of the motor is shown. Liner rings 8, 8 are disposed in gaps between the upper and lower ends of the impeller 3 and the pump casing.

As shown in FIG. 1, a pump-side shaft coupling 10 is fixed to the pump shaft 4 that supports the impeller 3, and a motor-side shaft coupling 11 is fixed to the motor shaft 7 of the motor, with a spacer 12 interposed between the pump-side shaft coupling 10 and the motor-side shaft coupling 11. Specifically, a coupling structure for coupling the pump shaft 4 of the pump and the motor shaft 7 of the motor comprises the pump-side shaft coupling 10, the motor-side shaft coupling 11, and the spacer 12. The pump-side shaft coupling 10 and the spacer 12 are coupled to each other by fasteners such as bolts and nuts, and the motor-side shaft coupling 11 and the spacer 12 are coupled to each other by fasteners such as bolts and nuts. According to this coupling structure, the mechanical seal 5 can be inspected and replaced only by the work of removing the pump-side shaft coupling 10 and the spacer 12, without moving the motor as heavy goods at all. The motor base 6 has a window (not shown) for work that is to be used when the mechanical seal 5 is inspected and replaced.

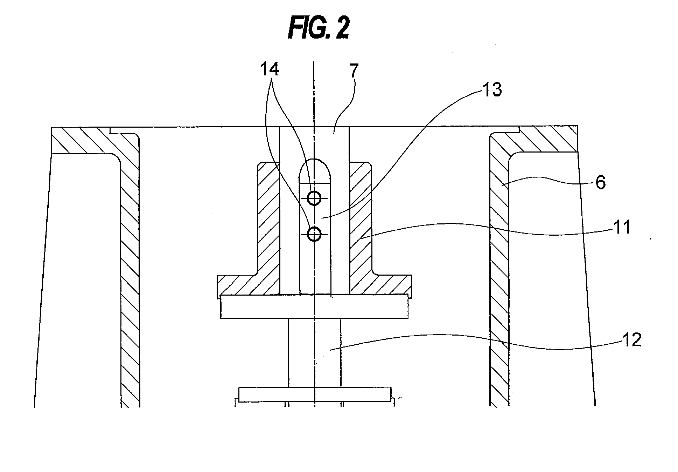

FIG. 2 is a schematic cross-sectional view showing an example of a structure in which the motor shaft 7 and the motor-side shaft coupling 11 are fixed to each other in the turbopump shown in FIG. 1. As shown in FIG. 2, a key 13 is interposed between the motor shaft 7 and the motor-side shaft coupling 11 so that the motor-side shaft coupling 11 is rotated together with the motor shaft 7. Further, the motor-side shaft coupling 11 has a plurality of (two in the drawing) female screws formed therein, and bolts 14 are screwed into the female screws of the moto-side shaft coupling 11. The bolts 14 are tightened so that their tip ends are held against the key 13 with strong forces, and thus the motor-side shaft coupling 11 is fixed so as not to move in an axial direction relative to the motor shaft 7. Since the tip ends of the bolts 14 are held against the key 13, the outer circumferential surface of the motor shaft 7 is prevented form being damaged when the motor shaft 7 and the motor-side shaft coupling 11 are fixed to each other.

In this manner, the motor shaft 7 and the motor-side shaft coupling 11 are axially fixed to each other using the bolts 14, and thus the motor-side shaft coupling 11 is prevented from falling out of the motor shaft 7. Therefore, the present coupling structure comprising the pump-side shaft coupling 10, the motor-side shaft coupling 11, and the spacer 12 can be employed even in a pump that undergoes a high axial thrust force. It is possible to prevent the motor-side shaft coupling 11 from falling out of the motor shaft 7 by fixing the motor-side shaft coupling 11 and the motor shaft 7 to each other by way of shrink fitting (or press fitting).

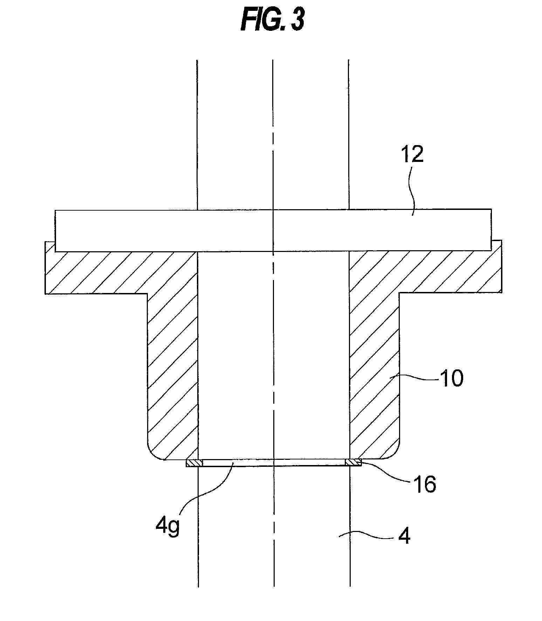

FIG. 3 is a schematic cross-sectional view showing an example of a structure in which the pump shaft 4 and the pump-side shaft coupling 10 are fixed to each other in the turbopump shown in FIG. 1. As shown in FIG. 3, the pump shaft 4 has a circumferential groove 4g formed therein at a predetermined position, and a C-type retaining ring 16 is fitted into the circumferential groove 4g. The C-type retaining ring 16 is used to position the pump-side shaft coupling 10 axially with respect to the pump shaft 4. A screw, a bolt, or a pin may be used instead of the C-shaped retaining ring 16.

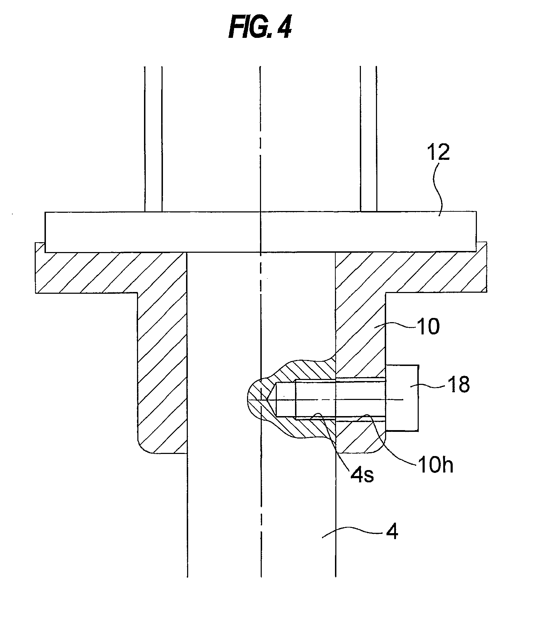

FIG. 4 is a schematic cross-sectional view showing another example of a structure in which the pump shaft 4 and the pump-side shaft coupling 10 are fixed to each other in the turbopump shown in FIG. 1. As shown in FIG. 4, the pump shaft 4 has a female screw 4s formed therein at a predetermined position, and the pump-side shaft coupling 10 has a through hole 10h formed in a cylindrical portion thereof. A bolt 18 is inserted through the through hole 10h, and screwed into the female screw 4s, thereby fixing the pump-side shaft coupling 10 and the pump shaft 4 to each other.

In this manner, the pump-side shaft coupling 10 and the pump shaft 4 are axially fixed to each other using the bolt 18, and thus the pump shaft 4 is prevented from falling out of the pump-side shaft coupling 10. Therefore, the present coupling structure comprising the pump-side shaft coupling 10, the motor-side shaft coupling 11, and the spacer 12 can be employed even in a pump that undergoes a high axial thrust force.

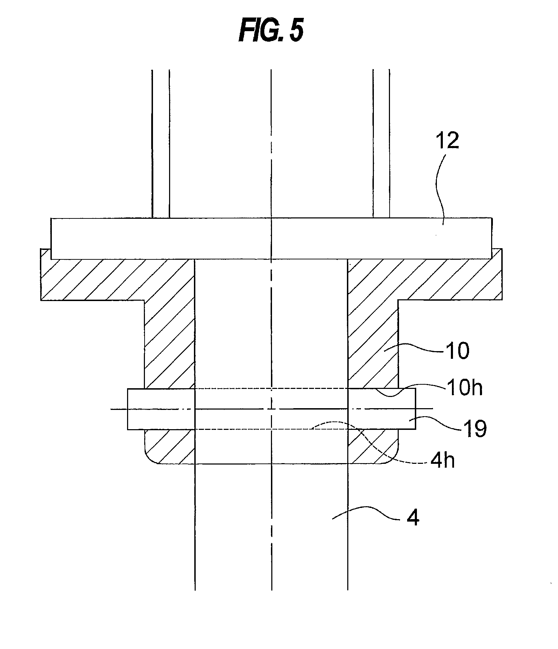

FIG. 5 is a schematic cross-sectional view showing still another example of a structure in which the pump shaft 4 and the pump-side shaft coupling 10 are fixed to each other in the turbopump shown in FIG. 1. As shown in FIG. 5, the pump shaft 4 has a through hole 4h formed therein at a predetermined position, and the pump-side shaft coupling 10 has a through hole 10h formed in a cylindrical portion thereof. A pin 19 is inserted through the through hole 10h of the pump-side shaft coupling 10 and the through hole 4h of the pump shaft 4, thereby fixing the pump-side shaft coupling 10 and the pump shaft 4 to each other.

In this manner, the pump-side shaft coupling 10 and the pump shaft 4 are axially fixed to each other using the pin 19, and thus the pump shaft 4 is prevented from falling out of the pump-side shaft coupling 10. Therefore, the present coupling structure comprising the pump-side shaft coupling 10, the motor-side shaft coupling 11, and the spacer 12 can be employed even in a pump that undergoes a high axial thrust force.

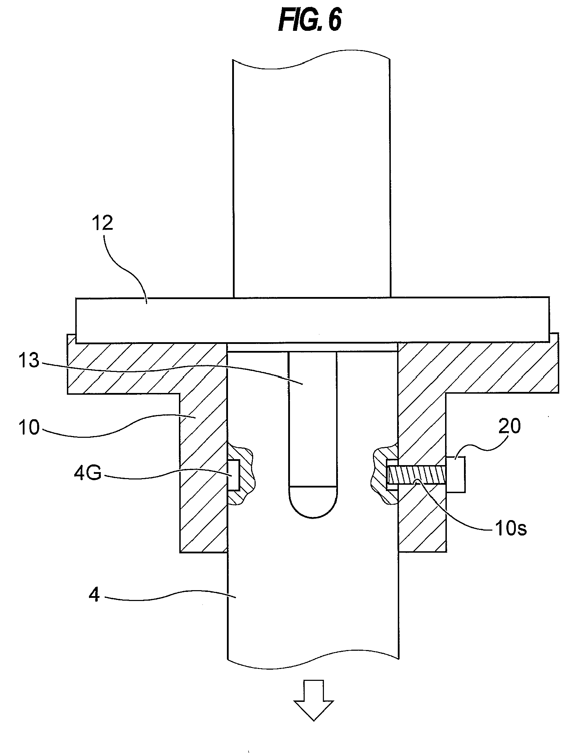

FIG. 6 is a schematic cross-sectional view showing still another example of a structure in which the pump shaft 4 and the pump-side shaft coupling 10 are fixed to each other in the turbopump shown in FIG. 1. As shown in FIG. 6, a key 13 is interposed between the pump shaft 4 and the pump-side shaft coupling 10 so that the pump shaft 4 and the pump-side shaft coupling 10 are rotated together. The pump shaft 4 has a groove 4G formed therein at a predetermined position, and the pump-side shaft coupling 10 has a female screw 10s formed in a cylindrical portion thereof. A bolt 20 is screwed into the female screw 10s of the pump-side shaft coupling 10, and the tip end of the bolt 20 is fitted into the groove 4G. The bolt 20 is tightened so that its tip end is held against the bottom of the groove 4G of the pump shaft 4 with strong forces, and thus the pump-side shaft coupling 10 and the pump shaft 4 are fixed to each other.

In this manner, the pump-side shaft coupling 10 and the pump shaft 4 are axially fixed to each other using the bolt 20 and the groove 4G, and thus the pump shaft 4 is prevented from falling out of the pump-side shaft coupling 10. Therefore, the present coupling structure comprising the pump-side shaft coupling 10, the motor-side shaft coupling 11, and the spacer 12 can be employed even in a pump that undergoes a high axial thrust force.

Further, since the tip end of the bolt 20 is held against the bottom of the groove 4G, the outer circumferential surface of the pump shaft 4 is prevented form being damaged when the pump-side shaft coupling 10 and the pump shaft 4 are fixed to each other. Therefore, when the pump-side shaft coupling 10 is installed on and removed from the pump shaft 4, the pump-side shaft coupling 10 is prevented from being galled, and hence the pump-side shaft coupling 10 can repeatedly be installed on and removed from the pump shaft 4 with ease.

According to the combination of the bolt 20 and the groove 4G shown in FIG. 6, the bolt 20 is caught (or engaged) by the upper end of the groove 4G of the pump shaft 4, thus preventing the pump shaft 4 from falling out of the pump-side shaft coupling 10 due to an axial thrust force. The number of bolts used may be increased depending on the axial thrust force that is applied, or the bolt may be increased in size.

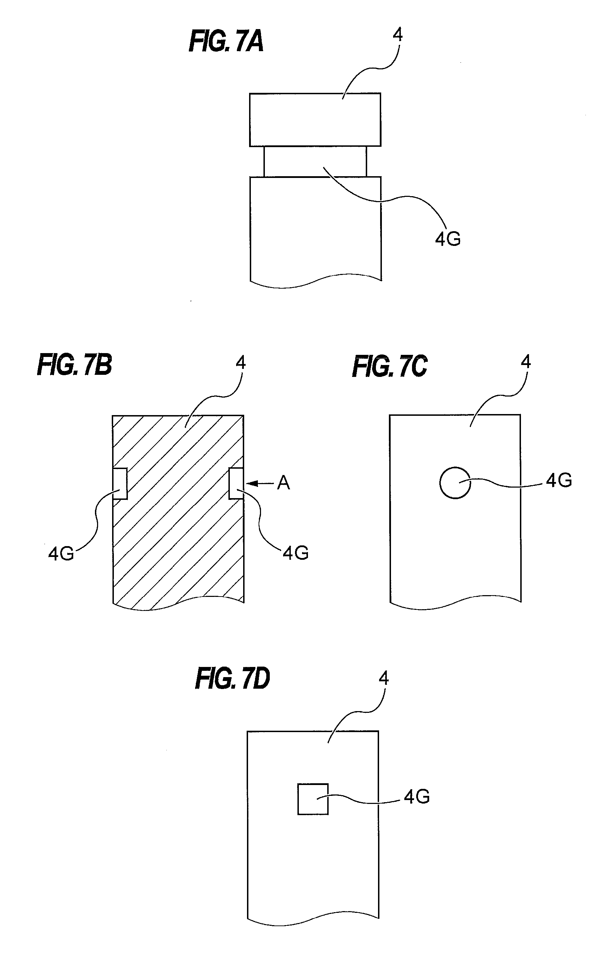

FIGS. 7A, 7B, 7C, and 7D are views showing details of the groove 4G formed in the pump shaft 4 shown in FIG. 6. FIG. 7A is a front elevational view of an example of the groove 4G, FIG. 7B is a cross-sectional view of another example of the groove 4G, and FIGS. 7C, 7D are views as viewed from an arrow A in FIG. 7B.

The groove 4G shown in FIG. 7A comprises a circumferential groove formed in a circumferential direction over the entire circumference of the pump shaft 4. The width of the circumferential groove is set to be slightly larger than the outer diameter of the bolt 20.

The grooves 4G shown in FIGS. 7B and 7C comprise round grooves formed in the pump shaft 4 at circumferentially spaced intervals. Each of the round grooves includes a circular cross-section or an elliptical cross-section. The inner diameter of each of the round grooves is slightly larger than the outer diameter of the bolt 20. The grooves 4G shown in FIG. 7D comprise polygonal grooves formed in the pump shaft 4 at circumferentially spaced intervals. Each of the polygonal grooves includes a polygonal cross-section such as a quadrangular cross-section, a hexagonal cross-section, or the like. The distance between opposite sides of each of the polygonal grooves is set to be slightly larger than the outer diameter of the bolt 20.

The round groove and the polygonal groove shown in FIGS. 7B, 7C and 7D have the characteristics capable of receiving larger axial thrust forces because the area of contact between the groove and the fixing screw or bolt becomes large to reduce the surface pressure. In the illustrated examples, two round grooves or polygonal grooves are formed in the pump shaft 4 at circumferentially spaced intervals. However, the number of round grooves or polygonal grooves used is changed properly depending on the axial thrust force applied to the pump shaft 4.

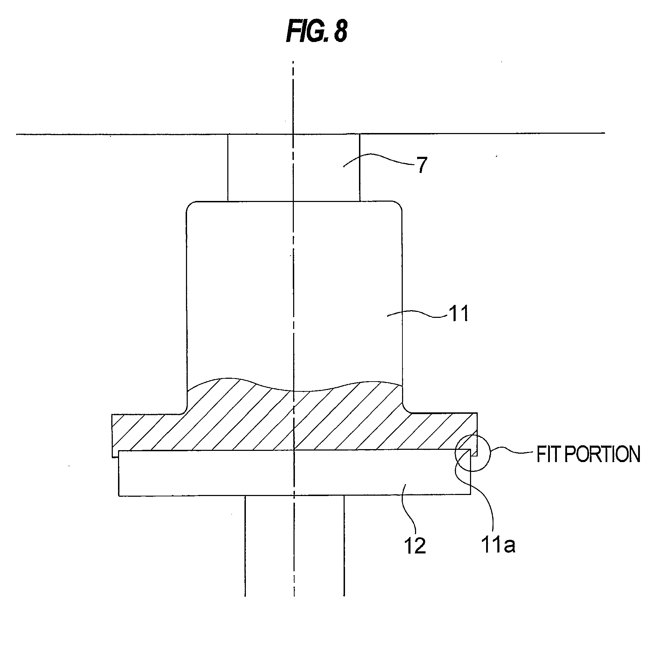

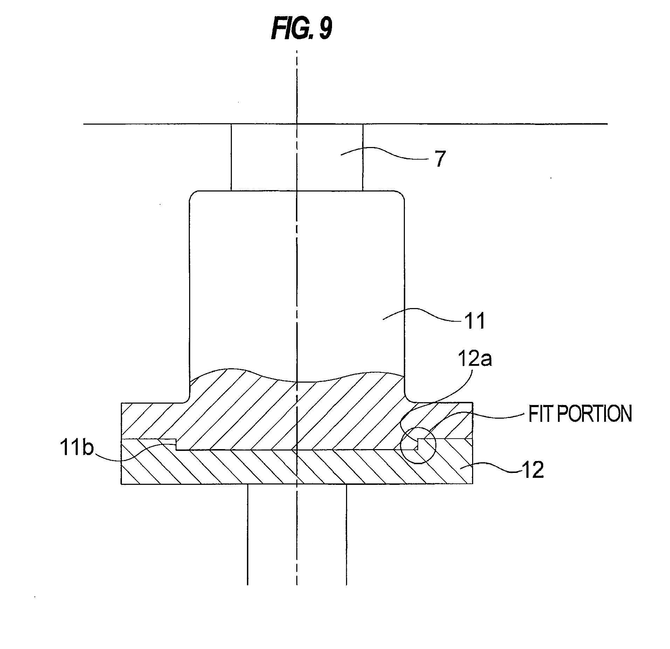

FIGS. 8 and 9 are schematic cross-sectional views showing details of fit portions of the motor-side shaft coupling 11 and the spacer 12 in the turbopump shown in FIG. 1.

In the example shown in FIG. 8, the outer diameter of the flange of the motor-side shaft coupling 11 is slightly larger than the outer diameter of the flange of the spacer 12. The flange of the motor-side shaft coupling 11 has a recess 11a formed in its outer circumferential portion, and the outer peripheral portion of the spacer 12 is fitted in the recess 11a. In other words, the motor-side shaft coupling 11 and the spacer 12 are coupled to each other by fit. Alternatively, the flange of the spacer 12 may have a recess formed therein, and the outer peripheral portion of the flange of the motor-side shaft coupling 11 may be fitted in the recess.

In the example shown in FIG. 9, the spacer 12 has a recess 12a formed in its flange, and the motor-side shaft coupling 11 has a projecting portion 11b on its flange, the recess 12a and the projecting portion 11b being fitted with each other. Alternatively, the spacer 12 may have a projecting portion on its flange and the motor-side shaft coupling 11 may have a recess formed in its flange. In the example shown in FIG. 9, the motor-side shaft coupling 11 and the spacer 12 have fit portions disposed inside the radially outermost portions of the motor-side shaft coupling 11 and the spacer 12. In the example shown in FIG. 9, the fit portions of the motor-side shaft coupling 11 and the spacer 12 are not positioned in the radially outermost portions, and hence are less liable to be scratched or dented in error when the motor-side shaft coupling 10 and the spacer 12 are individually kept in storage.

As shown in FIGS. 8 and 9, the motor-side shaft coupling 11 and the spacer 12 that are coupled to each other by the fit can achieve high concentricity and perpendicularity. The pump-side shaft coupling 10 and the spacer 12 are fitted in the same manner as the examples shown in FIGS. 8 and 9.

In the above embodiments, the pump shaft 4 and the pump-side shaft coupling 10, and the motor shaft 7 and the motor-side shaft coupling 11 should preferably be fastened by using a reamer bolt or by using clearance fit or transition fit between a bolt and a bolt hole to make a gap between the bolt and the bolt hole small for preventing the bolt from suffering shear failure due to an impact load.

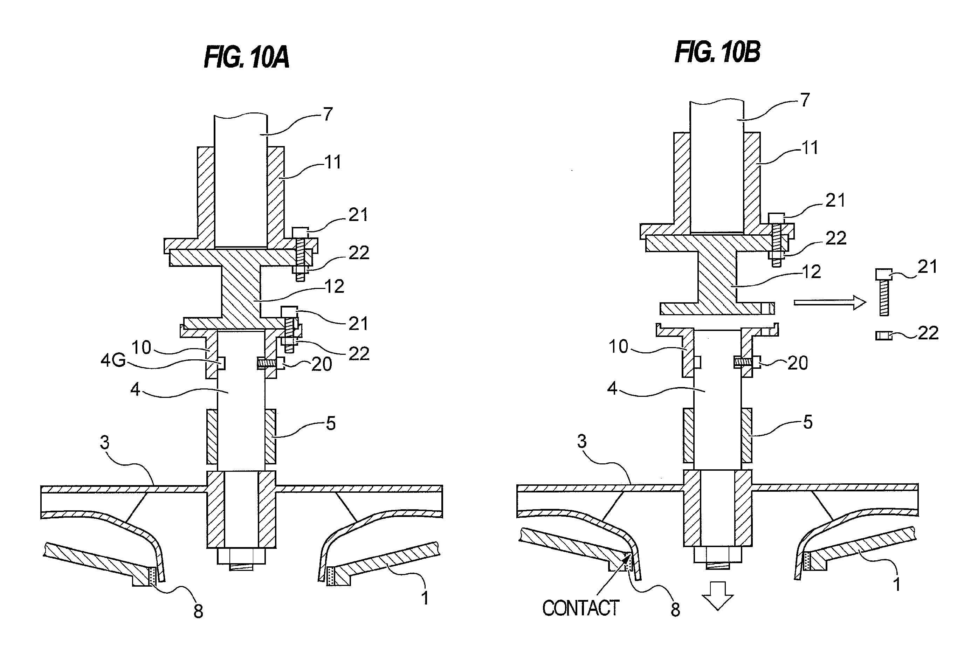

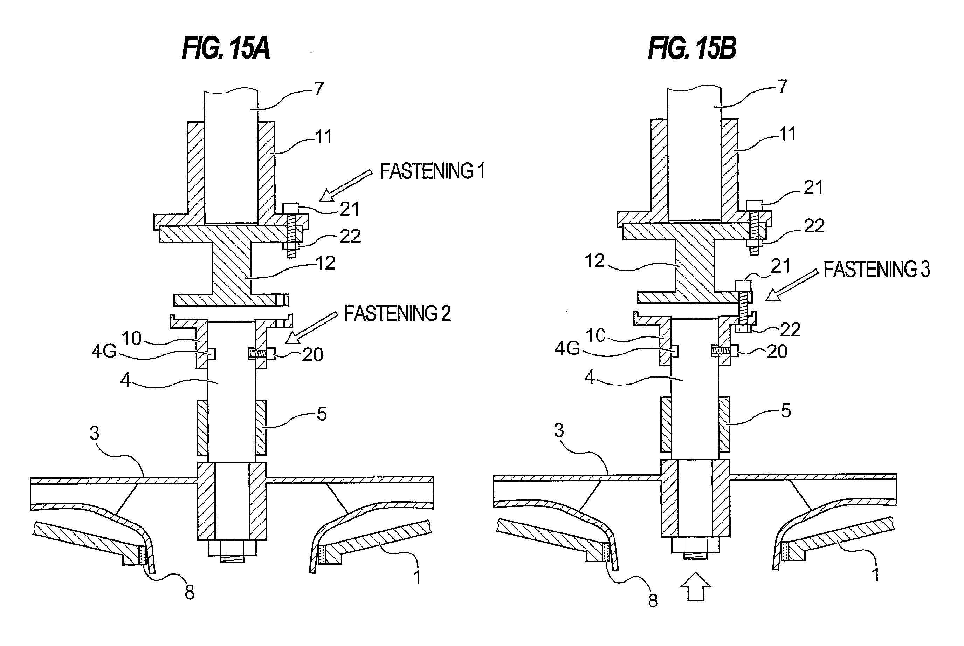

A procedure for replacing the mechanical seal 5 in the turbopump shown in FIG. 1 will be described below with reference to FIGS. 10A, 10B through 15A, 15B. FIGS. 10A, 10B through 15A, 15B show only major components associated with replacement of the mechanical seal 5. Specifically, only the portion of the casing 1 which holds the liner ring 8 is illustrated, and the casing cover 2 and the motor base 6 are omitted from illustration.

FIG. 10A is a schematic cross-sectional view showing an initial state (normal state) before the mechanical seal 5 mounted on the pump shaft 4 is replaced. As shown in FIG. 10A, the pump shaft 4 and the pump-side shaft coupling 10 are fixed to each other by inserting the bolt 20 into the groove 4G of the pump shaft 4 and tightening the bolt 20. Further, the pump-side shaft coupling 10 and the spacer 12 are fixed to each other by bolts 21 and nuts 22 that are fastened, and the motor-side shaft coupling 11 and the spacer 12 are fixed to each other by bolts 21 and nuts 22 that are fastened. Alternatively, the flange of the pump-side shaft coupling 10 may have female screws formed therein and the upper flange of the spacer 12 may have female screws formed therein without the use of the nuts 22.

FIG. 10B is a view showing a first step of the procedure for replacing the mechanical seal 5, i.e., a schematic cross-sectional view showing a process of releasing the fixation of the pump-side shaft coupling 10 and the spacer 12. As indicated by the arrow in FIG. 10B, the bolts 21 and the nuts 22 by which the pump-side shaft coupling 10 and the spacer 12 have been fixed together are removed to release the fixation of the pump-side shaft coupling 10 and the spacer 12. Thus, an entire rotor (the impeller 3, the pump shaft 4, the mechanical seal 5, and the pump-side shaft coupling 10) drops onto the liner ring 8 held by the casing 1. Therefore, the impeller 3 and the liner ring 8 are brought into contact with each other.

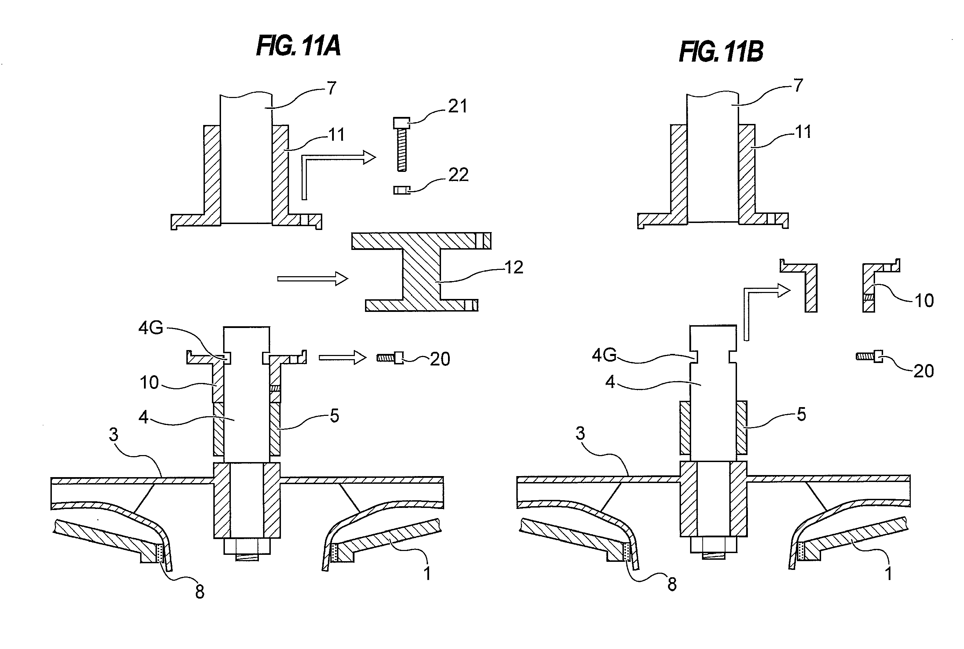

FIG. 11A is a view showing a second step of the procedure for replacing the mechanical seal 5, i.e., a schematic cross-sectional view showing a process of removing the spacer 12. As indicated by the arrow in an upper right area of FIG. 11A, the bolts 21 and the nuts 22 by which the motor-side shaft coupling 11 and the spacer 12 have been fixed together are removed, and as indicated by the arrow in a lower right area of FIG. 11A, the bolt 20 is removed. Then, the pump-side shaft coupling 10 is displaced downwardly until the lower end of the pump-side shaft coupling 10 is brought into contact with the mechanical seal 5, thereby providing a sufficient space below the spacer 12. Then, as indicated by the arrow in a central area of FIG. 11A, the spacer 12 is removed. At this time, since there is a sufficient space between the lower end of the spacer 12 and the upper end of the pump shaft 4, the spacer 12 can be removed laterally with enough room.

FIG. 11B is a view showing a third step of the procedure for replacing the mechanical seal 5, i.e., a schematic cross-sectional view showing a process of removing the pump-side shaft coupling 10 from the pump shaft 4. As indicated by the arrow in an upper right area of FIG. 11B, the pump-side shaft coupling 10 is removed from the pump shaft 4. Even if the bolt 20 is not removed entirely from the pump-side shaft coupling 10, the pump-side shaft coupling 10 can be removed from the pump shaft 4, with the bolt 20 retracted until the tip end of the bolt 20 is not positioned in the groove 4G.

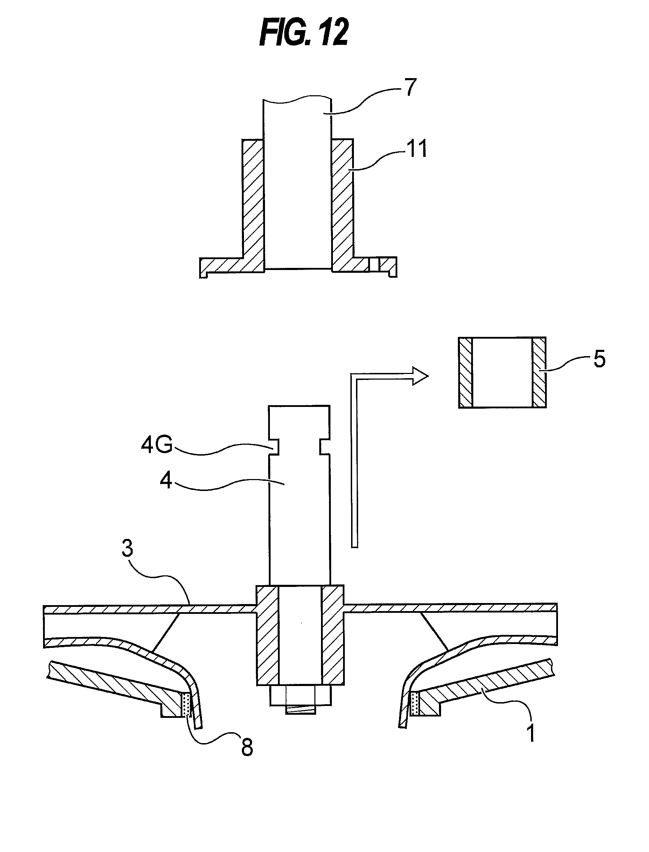

FIG. 12 is a view showing a fourth step of the procedure for replacing the mechanical seal 5, i.e., a schematic cross-sectional view showing a process of removing the mechanical seal 5 from the pump shaft 4. As indicated by the arrow in FIG. 12, the mechanical seal 5 is removed from the pump shaft 4. In this manner, the disassembly procedure shown in FIGS. 10B through 12 is now finished.

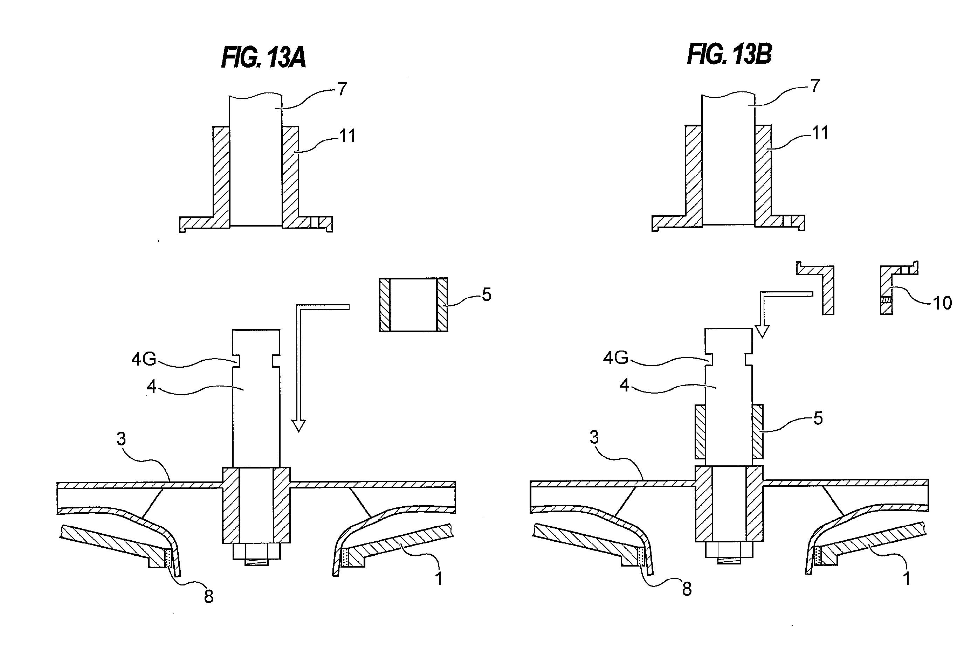

FIG. 13A is a view showing a fifth step of the procedure for replacing the mechanical seal 5, i.e., a schematic cross-sectional view showing a process of installing a mechanical seal 5 on the pump shaft 4. As indicated by the arrow in FIG. 13A, a mechanical seal 5 as a replacement object is installed on the pump shaft 4.

FIG. 13B is a view showing a sixth step of the procedure for replacing the mechanical seal 5, i.e., a schematic cross-sectional view showing a process of installing the pump-side shaft coupling 10 on the pump shaft 4. As indicated by the arrow in FIG. 13B, the pump-side shaft coupling 10 is installed on the pump shaft 4.

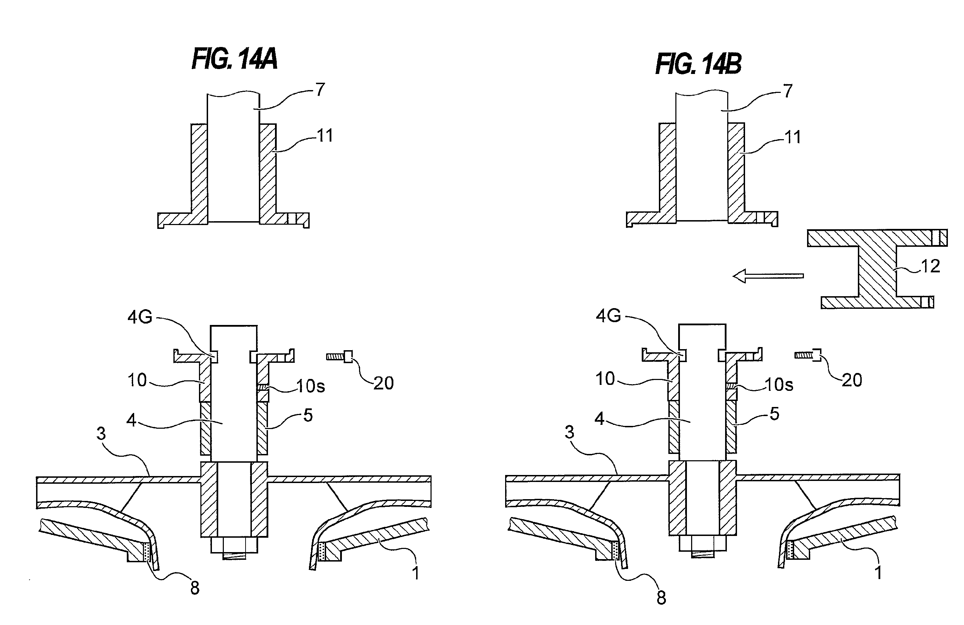

FIG. 14A is a view showing a seventh step of the procedure for replacing the mechanical seal 5, i.e., a schematic cross-sectional view showing a process of fixing the pump-side shaft coupling 10 and the pump shaft 4 to each other. As shown in FIG. 14A, the pump-side shaft coupling 10 installed on the pump shaft 4 is displaced downwardly until the lower end of the pump-side shaft coupling 10 is brought into contact with the mechanical seal 5, providing a sufficient space above the pump shaft 4.

FIG. 14B is a view showing an eighth step of the procedure for replacing the mechanical seal 5, i.e., a schematic cross-sectional view showing a process of placing the spacer 12 between the pump-side shaft coupling 10 and the motor-side shaft coupling 11. As indicated by the arrow in FIG. 14B, the spacer 12 is placed between the pump-side shaft coupling 10 and the pump shaft 4. At this time, since there is a sufficient space between the motor-side shaft coupling 11 and the pump shaft 4, the spacer 12 can be inserted with enough room.

FIG. 15A is a view showing a ninth step of the procedure for replacing the mechanical seal 5, i.e., a schematic cross-sectional view showing a process of fixing the motor-side shaft coupling 11 and the spacer 12 to each other. As indicated by the arrow in an upper right area of FIG. 15A, the bolts 21 and the nuts 22 are fastened (FASTENING 1) together to fix the motor-side shaft coupling 11 and the spacer 12 to each other. At this time, as shown in FIGS. 8 and 9, the motor-side shaft coupling 11 and the spacer 12 are coupled to each other by the fit to achieve high concentricity and perpendicularity.

Next, the pump-shaft shaft coupling 10 is displaced upwardly, and then the bolt 20 is screwed into the female screw 10s of the pump-side shaft coupling 10. The bolt 20 is fastened (FASTENING 2) until its tip end is brought into contact with the bottom of the groove 4G of the pump shaft 4, thereby fixing the pump-side shaft coupling 10 and the pump shaft 4 to each other.

FIG. 15B is a view showing a tenth step of the procedure for replacing the mechanical seal 5, i.e., a schematic cross-sectional view showing a process of coupling the pump-side shaft coupling 10 and the spacer 12 to each other. As indicated by the arrow in FIG. 15B, the bolts 21 and the nuts 22 are fastened (FASTENING 3) together to fix the pump-side shaft coupling 10 and the spacer 12 to each other. At this time, the entire rotor (the impeller 3, the pump shaft 4, the mechanical seal 5, and the pump-side shaft coupling 10) that has dropped on the liner ring 8 held by the casing 1, and the spacer 12 are fixed to each other using the bolts 21 and the nuts 22. The entire rotor is gradually lifted as the bolts 21 and the nuts 22 are fastened together. When the bolts 21 and the nuts 22 are completely fastened together, the pump-side shaft coupling 10 and the spacer 12 are coupled to each other by the fit to achieve high concentricity and perpendicularity. At this time, the entire rotor returns to its initial state (normal state) in which the impeller 3 and the liner ring 8 are kept out of contact with each other, with a clearance formed between the impeller 3 and the liner ring 8, as shown in FIG. 10A. In this manner, the procedure for replacing and reassembling the mechanical seal shown in FIGS. 13A through 15B is now finished.

As shown in FIGS. 10 through 15B, according to the procedure for replacing the mechanical seal 5 in the present embodiment, when the spacer 12 in the intermediate region between the motor-side shaft coupling 11 and the pump-side shaft coupling 10 is to be removed, the pump shaft 4 can be dropped and the pump-side shaft coupling 10 can be displaced downwardly in order to provide a space corresponding to the fit between the spacer and the shaft coupling and also to allow the spacer 12 to be removed laterally with enough room. Consequently, the present coupling structure comprising the pump-side shaft coupling 10, the motor-side shaft coupling 11, and the spacer 12 can be employed even in a pump in which there is not enough falling space for the rotating body (rotor) including the impeller 3, the pump shaft 4, and the pump-side shaft coupling 10.

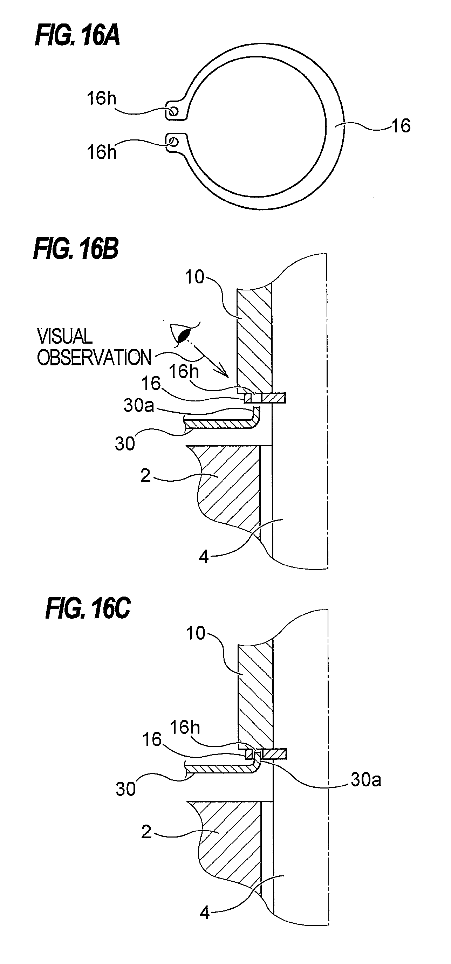

A work procedure for removing the C-shaped retaining ring 16 in the case where the C-shaped retaining ring 16 is provided to position the pump-side shaft coupling 10 axially with respect to the pump shaft 4 as shown in FIG. 3 will be described below with reference to FIGS. 16A, 16B and 16C.

FIG. 16A is a schematic plan view of the C-shaped retaining ring 16, and FIGS. 16B and 16C are schematic cross-sectional views showing working processes for removing the C-shaped retaining ring 16 from the pump shaft 4.

As shown in FIG. 16A, the C-shaped retaining ring 16 has tool insertion holes 16h formed respectively in both ends of a C-shaped main body.

As shown in FIG. 16B, the pump-side shaft coupling 10 has a lower end face which is brought into contact with the C-shaped retaining ring 16 mounted on the pump shaft 4. The casing cover 2 (see FIG. 1) is disposed below the C-shaped retaining ring 16. When the C-shaped retaining ring 16 is removed from the pump shaft 4, as shown in FIG. 16B, a removing and installing tool 30 is inserted into the gap between the C-shaped retaining ring 16 and the casing cover 2 by visual observation. Then, as shown in FIG. 16C, claws 30a of the tip ends of the removing and installing tool 30 are inserted into the tool insertion holes 16h of the C-shaped retaining ring 16. Thereafter, the C-shaped retaining ring 16 is forcibly expanded by the removing and installing tool 30, and removed from the pump shaft 4.

As shown in FIGS. 16B and 16C, when the C-shaped retaining ring 16 has been actually removed from the pump shaft 4 using the removing and installing tool 30, it has been found that because the gap between the C-shaped retaining ring 16 and the casing cover 2 is small and the tool insertion holes 16h cannot be visually observed from above, the insertion work of the claws 30a of the removing and installing tool 30 into the tool insertion holes 16h of the C-shaped retaining ring 16 is extremely difficult to perform. It has been also found that the claws 30a of the removing and installing tool 30 tends to slip off the tool insertion holes 16h of the C-shaped retaining ring 16 during work.

Therefore, the inventors of the present application have conceived of using a dual-split ring instead of the C-shaped retaining ring 16.

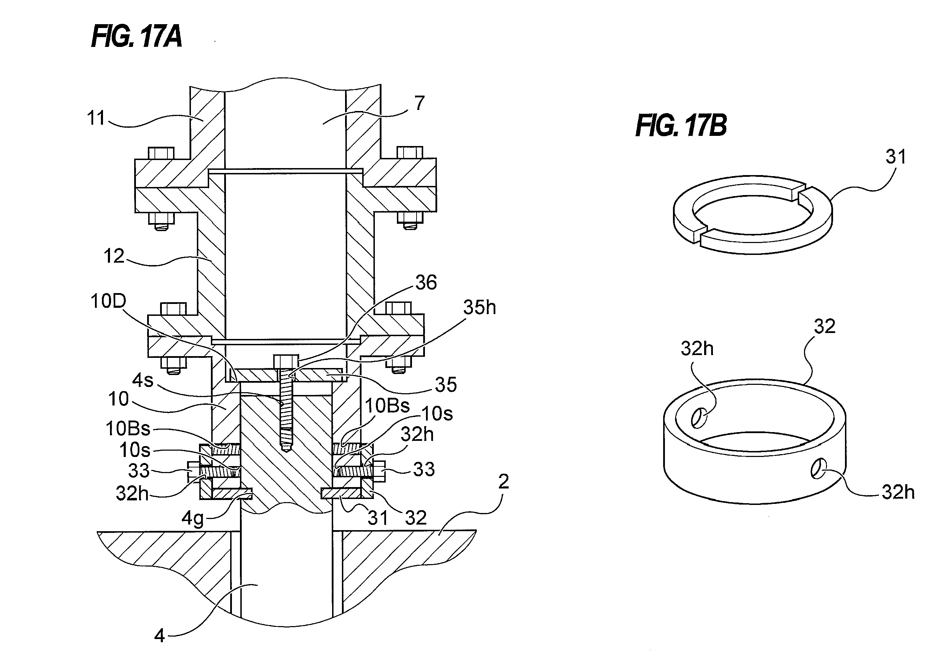

FIG. 17A is a schematic cross-sectional view showing an example of a structure in which a dual-split ring for positioning the pump-side shaft coupling 10 axially with respect to the pump shaft 4 is mounted on the pump-side shaft coupling 10, and FIG. 17B is a view showing the dual-split ring and a retaining ring for securing the dual-split ring.

As shown in FIG. 17A, the pump shaft 4 has a circumferential groove 4g formed therein at a predetermined position, and a dual-split ring 31 is mounted in the circumferential groove 4g. The dual-split ring 31 comprises two split halves of a circular ring, as shown in an upper perspective view in FIG. 17B. As shown in FIG. 17A, when the dual-split ring 31 is mounted in the circumferential groove 4g, the outer diameter of the dual-split ring 31 is set to be equal to the outer diameter of the cylindrical portion of the pump-side shaft coupling 10. A retaining ring 32 is fitted over an outer circumferential surface of the dual-split ring 31 and an outer circumferential surface of the cylindrical portion of the pump-side shaft coupling 10. As shown in a lower perspective view in FIG. 17B, the retaining ring 32 is in the form of a short hollow cylinder. As shown in FIG. 17A, a plurality of (e.g., four) female screws 10s are formed at circumferentially spaced intervals in the cylindrical portion of the pump-side shaft coupling 10 at a position slightly above the lower end of the cylindrical portion of the pump-side shaft coupling 10, and through holes 32h are formed in the retaining ring 32 at positions corresponding to the female screws 10s. Female screws 10Bs (described below) for use in a disassembling process are formed in the cylindrical portion of the pump-side shaft coupling 10 at positions above the female screws 10s. When bolts 33 are inserted through the through holes 32h and screwed into the female screws 10s, the retaining ring 32 can be fixed to the cylindrical portion of the pump-side shaft coupling 10. When the retaining ring 32 is fixed to the pump-side shaft coupling 10, the outer circumferential surface of the dual-split ring 31 is brought into close contact with the inner circumferential surface of the retaining ring 32. Thus, the dual-split ring 31 is fixed by the retaining ring 32, with the dual-split ring 31 mounted in the circumferential groove 4g.

As shown in FIG. 17A, the inner diameter of an upper portion of the pump-side shaft coupling 10 is set to be larger than the inner diameter of a lower portion of the pump-side shaft coupling 10, and the upper portion of the pump-side shaft coupling 10 has a step 10D formed therein. A disk-shaped plate 35 is placed on the step 10D of the pump-side shaft coupling 10 and has a through hole 35h formed therein. A bolt 36 extending in an axial direction of the pump shaft 4 is inserted through the through hole 35h of the plate 35 and screwed into the female screw 4s in the upper end of the pump shaft 4. Therefore, since the bolt 36 and the plate 35 can receive axial forces, the pump shaft 4 is prevented from falling out of the pump-side shaft coupling 10. Thus, the present coupling structure comprising the pump-side shaft coupling 10, the motor-side shaft coupling 11, and the spacer 12 can be employed even in a pump that undergoes a high axial thrust force.

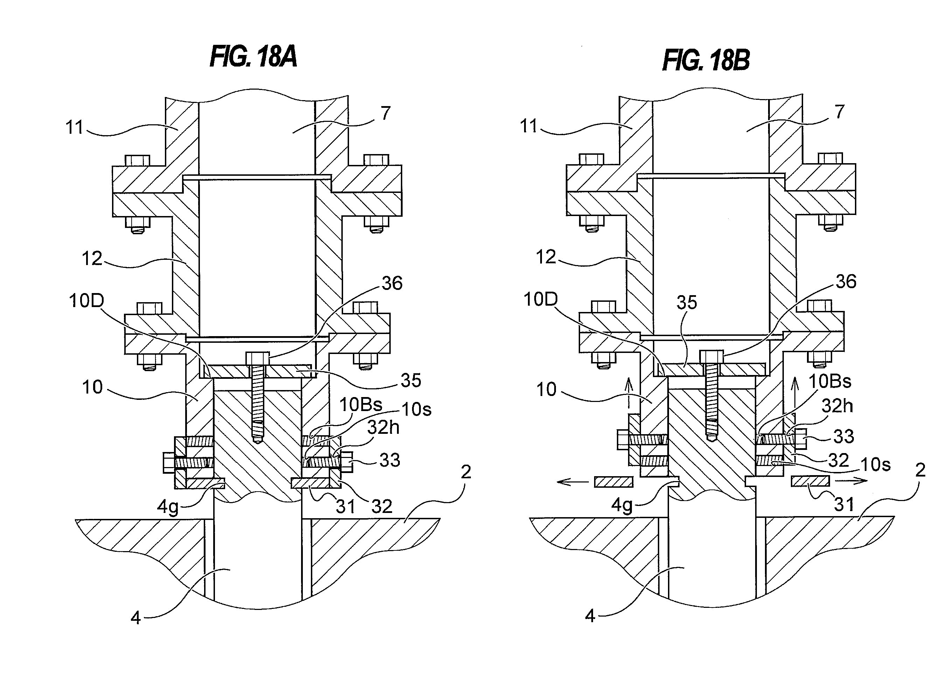

FIGS. 18A and 18B are schematic cross-sectional views showing operating state and disassembling state of the positioning structure of the pump-side shaft coupling 10 which uses the dual-split ring having the structure shown in FIG. 17A, and FIG. 18A shows the operating state of the positioning structure and FIG. 18B shows the disassembling state of the positioning structure.

When the positioning structure is in operation, as shown in FIG. 18A, the retaining ring 32 is in a lowered position and fixed to the pump-side shaft coupling 10 by the bolts 33. The outer circumferential surface of the dual-split ring 31 is brought into close contact with the inner circumferential surface of the retaining ring 32, and the dual-split ring 31 is fixed by the retaining ring 32, with the dual-split ring 31 mounted in the circumferential groove 4g.

When the positioning structure is disassembled, the bolts 33 are removed, and the retaining ring 32 is slid upwardly along the cylindrical portion of the pump-side shaft coupling 10. Then, as shown in FIG. 18B, the bolts 33 are inserted through the through holes 32h and screwed into the female screws 10Bs for disassembling in the pump-side shaft coupling 10, thereby securing the retaining ring 32 to the cylindrical portion of the pump-side shaft coupling 10. Thus, the dual-split ring 31 is freed. Since the dual-split ring 31 is composed of two split halves, the dual-split ring 31 can simply be removed radially outwardly as indicated by the arrows even in the absence of enough space. Thereafter, the pump-side shaft coupling 10 is slid downwardly along the pump shaft 4, so that the spacer 12 can be removed.

As described above, the positioning structure of the pump-side shaft coupling 10 which employs the dual-split ring 31 shown in FIGS. 17A, 17B, 18A and 18B, the plate 35, and the bolt 36 can receive excessive axial loads and can easily be disassembled. More specifically, the positioning structure has the following features.
(1) The pump-side shaft coupling 10 and the pump shaft (main shaft) 4 are firmly coupled to each other by the plate 35 and the bolt 36, and are capable of withstanding excessive axial loads.
(2) The lower end of the pump-side shaft coupling 10 is fixed by the dual-split ring 31, and thus installation and deinstallation can be simplified. Specifically, when the pump-side shaft coupling 10 is slid downwardly, the spacer 12 can be removed, and thus the cartridge mechanical seal can be removed without removal of the motor-side shaft coupling 11.
(3) The retaining ring 32 that can be slid up and down and be fixed can be slid downwardly to secure the dual-split ring 31 at the time of operation, and can be slid upwardly to remove the dual-split ring 31 at the time of maintenance.

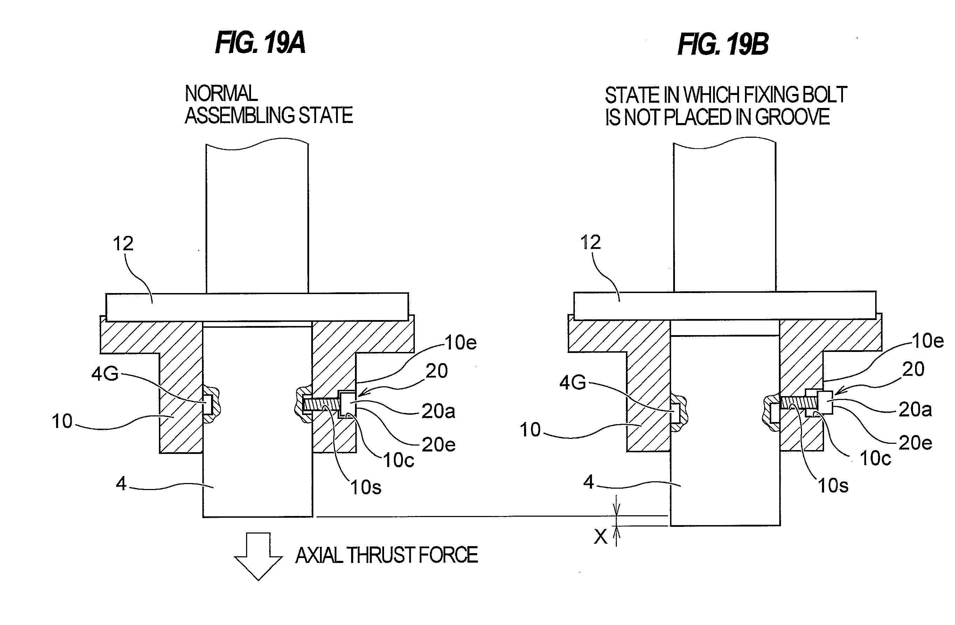

In the embodiment in which, as shown in FIG. 6, the groove 4G is provided in the outer circumferential surface of the pump shaft 4, the female screw 10s is provided in the pump-side shaft coupling 10, and the bolt 20 is screwed into the female screw 10s to allow the tip end of the bolt 20 to be fitted into the groove 4G, thereby fixing the pump-side shaft coupling 10 to the pump shaft 4, an assembling state of the pump shaft 4 and the pump-side shaft coupling 10 will be described below with reference to FIGS. 19A and 19B.

FIG. 19A is a schematic cross-sectional view showing a normal assembling state of the pump shaft 4 and the pump-side shaft coupling 10. As shown in FIG. 19A, the groove 4G is formed in the pump shaft 4 at a predetermined position, and the female screw 10s is formed in the cylindrical portion of the pump-side shaft coupling 10. Then, the fixing bolt 20 is screwed into the female screw 10s of the pump-side shaft coupling 10 to allow the tip end of the fixing bolt 20 to be fitted into the groove 4G. When the bolt 20 is tightened until the tip end of the fixing bolt 20 is held against the bottom of the groove 4G of the pump shaft 4 with strong forces, the pump-side shaft coupling 10 is fixed to the pump shaft 4. A counterbore hole 10c for housing the head 20a of the fixing bolt 20 is provided in the pump-side shaft coupling 10.

As shown in FIG. 19A, in the normal assembling state of the pump shaft 4 and the pump-side shaft coupling 10, when the bolt 20 is tightened until the tip end of the fixing bolt 20 is held against the bottom of the groove 4G of the pump shaft 4, the bolt head 20a in its entirety is housed in the counterbore hole 10c. At this time, the end face 20e of the bolt head 20a and the outer circumferential surface 10e of the pump-side shaft coupling 10 that surrounds the counterbore hole 10c are set to be substantially flush with each other. Here, "substantially flush with each other" refers to the state in which the end face 20e of the bolt head 20a and the outer circumferential surface 10e of the pump-side shaft coupling 10 are flat without any step therebetween, or the state in which there is a slight step within ± 2 mm between the end face 20e of the bolt head 20a and the outer circumferential surface 10e of the pump-side shaft coupling 10, provided that + (plus) means the state in which the end face 20e of the bolt head 20a bulges (projects) from the outer circumferential surface 10e of the pump-side shaft coupling 10. In the illustrated example, the fixing bolt 20 comprises a hexagon socket head cap screw. However, the fixing bolt 20 may comprise a hexagon socket setscrew. If the hexagon socket setscrew is used, when the tip end of the setscrew is held against the bottom of the groove 4G of the pump shaft 4, the end face of the setscrew at the hexagonal socket side and the outer circumferential surface 10e of the pump-side shaft coupling 10 that surrounds the counterbore hole 10c becomes substantially flush with each other.

FIG. 19B is a schematic cross-sectional view showing the state in which the pump shaft 4 and the pump-side shaft coupling 10 are not assembled properly because the fixing bolt 20 is not placed in the groove 4G of the pump shaft 4. As shown in FIG. 19B, when the tip end of the fixing bolt 20 is not fitted into the groove 4G of the pump shaft 4, i.e., when the fixing bolt 20 is not inserted into the groove 4G accurately, the end face 20e of the bolt head 20a bulges (projects) from the outer circumferential surface 10e of the pump-side shaft coupling 10. Therefore, the worker can easily recognize the state in which the pump shaft 4 and the pump-side shaft coupling 10 are not assembled properly. In the event of an improper assembling, the pump shaft 4 may possibly be axially displaced (by X in FIG. 19B) or may possibly fall off (slip off) due to an axial thrust force. However, when the pump shaft 4 and the pump-side shaft coupling 10 are not assembled properly, because the end face 20e of the bolt head 20a bulges (projects) from the outer circumferential surface 10e of the pump-side shaft coupling 10 as shown in FIG. 19B, the worker can easily recognize the state in which the pump shaft 4 and the pump-side shaft coupling 10 are not assembled properly. Thus, the improper assembling of the pump shaft 4 and the pump-side shaft coupling 10 can be prevented. The fixing bolt 20 may have any configuration, as long as it has a structure capable of fastening the pump-side shaft coupling 10 to the pump shaft 4, such as a hexagon socket head cap screw or a hexagon socket setscrew.

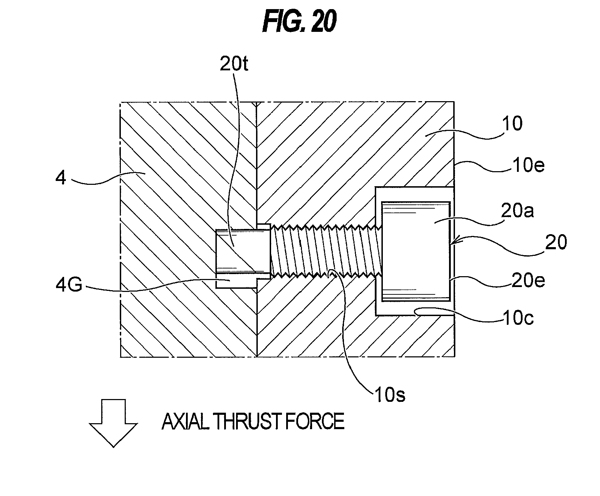

FIG. 20 is a schematic cross-sectional view showing an example of the fixing bolt 20 that is used in the embodiment shown in FIGS. 19A and 19B. In the example shown in FIG. 20, the fixing bolt 20 has a tip end 20t which is not threaded. Specifically, the tip end 20t, which is inserted into the groove 4G of the pump shaft 4, of the fixing bolt 20 shown in FIG. 20 is in the form of an unthreaded cylinder that is smaller in diameter than the screw thread portion of the bolt.

When an axial thrust force is applied to the pump shaft 4 and the applied axial thrust force cannot be borne only by the frictional force on the tip end face of the fixing bolt 20, the upper end face of the groove 4G and the tip end 20t of the fixing bolt 20 are held in contact with each other, as shown in FIG. 20. In this case, if the fixing bolt 20 is fully threaded, the screw thread of the fixing bolt 20 may be deformed in shape due to the contact between the upper end face of the groove 4G and the screw thread. If attempts are made to remove the fixing bolt 20 while the screw thread is being held in contact with the upper end face of the groove 4G, the fixing bolt 20 and the female screw 10s of the pump-side shaft coupling 10 may be galled. The structure shown in FIG. 20 is effective to prevent the screw thread from being deformed or galled because the smooth outer circumferential surface of the tip end 20t of the fixing bolt 20 is held in contact with the upper end face of the groove 4G.

FIGS. 21A and 21B are views showing an example of the groove 4G of the pump shaft 4 that is used in the embodiment shown in FIGS. 19A and 19B. FIG. 21A is a schematic cross-sectional view showing an assembling state of the pump shaft 4 and the pump-side shaft coupling 10, and FIG. 21B is a side elevational view of the pump shaft 4 having the groove 4G. In the example shown in FIGS. 21A and 21B, the groove 4G formed in the pump shaft 4 comprises a round groove, and has an inlet corner having a chamfering CH or a tapered shape T. The chamfering CH or the tapered shape T of the inlet corner of the groove 4G allows the fixing bolt 20 to be easily inserted into the groove 4G. Further, the tip end 20t of the fixing bolt 20 has a corner having a chamfering CH or a tapered shape T. Thus, the fixing bolt 20 can be easily inserted into the female screw 10s.

Next, preferable materials for the motor shaft, the shaft couplings (motor-side, pump-side), and the pump shaft will be described below.

Although materials for the motor shaft, the shaft couplings (motor-side, pump-side), and the pump shaft can be selected as desired, they may preferably be selected from the following Table 1.

**[Table 1]**

| Part | Material | Linear coefficient of expansion /°C |
|---|---|---|
| Motor shaft | Special steel such as S35C * In the case of general-purpose motor, the special steel which is a magnetic material is generally used. | 9 - 12.5 × 10⁻⁶ |
| Shaft coupling | Common steel such as SS400 Cast iron such as FC200 * Depending on cost and strength | 9 - 12.5 × 10⁻⁶ |
| Pump shaft | Stainless steel Austenite stainless steel such as SUS304 may be used for corrosion resistance and strength because the pump shaft is a wetted part. | 15 - 18 × 10⁻⁶ |

The pump shaft and the shaft coupling are assembled together with a clearance fit as they need to be removed for replacing the mechanical seal. As the temperature rises during the operation of the pump, the clearance in the clearance fit decreases and may be eliminated depending on the increased temperature value because the linear coefficient of expansion of the pump shaft is larger than that of the shaft coupling in the case of the above combination of materials. This is advantageous because such decrease of the clearance acts to prevent the main shaft from being pulled axially due to an axial thrust force.

The motor shaft and the shaft coupling are fixed together with a shrink fit or press fit because they do not need to be removed. Therefore, the materials of both parts cause no problem insofar as materials having equivalent linear coefficients of expansion are selected. However, in order to enhance falling-prevention effect of the main shaft against an axial thrust force as is the case with the pump shaft side, the motor shaft may be made of a material having a large linear coefficient of expansion (e.g., austenite stainless steel). Since use of an iron-base special steel such as S35C which is a magnetic material for a motor body part is advantageous for motor characteristics, it is necessary to join special steel and austenite stainless steel by pressure bonding or shrink fitting (press fitting).

The present invention is applicable to other types of turbopumps including single-stage or multiple-stage vertical line pumps.

Although certain preferred embodiments of the present invention have been shown and described in detail, it should be understood that various changes and modifications may be made without departing from the scope of the appended claims.

## Claims

1. A turbopump comprising:
a main shaft configured to support an impeller;
a pump casing configured to house the impeller;
a mechanical seal provided in a portion where the main shaft passes through the pump casing; and
a pump-side shaft coupling, a motor-side shaft coupling, and a spacer which are configured to connect the main shaft and a motor shaft of a motor, the spacer being interposed between the pump-side shaft coupling and the motor-side shaft coupling;
wherein a groove is formed in an outer circumferential surface of the main shaft, a female screw is formed in the pump-side shaft coupling, and a bolt is screwed into the female screw to fit a tip end of the bolt into the groove.

2. The turbopump according to claim 1, wherein the groove comprises a circumferential groove extending in a circumferential direction of the main shaft.

3. The turbopump according to claim 1, wherein the groove comprises a round groove having a circular cross-section or an elliptical cross-section, or a polygonal groove having a polygonal cross-section.

4. The turbopump according to any one of claims 1 to 3, wherein the tip end of the bolt is brought into contact with the bottom of the groove.

5. The turbopump according to any one of claims 1 to 4, wherein a counterbore hole is formed in a portion where the female screw is formed in the pump-side shaft coupling, the counterbore hole being configured to house a head of the bolt.

6. The turbopump according to claim 5, wherein when the tip end of the bolt is brought into contact with the bottom of the groove, an end face of the head of the bolt and an outer circumferential surface of the pump-side shaft coupling that surrounds the counterbore hole become substantially flush with each other.

7. The turbopump according to any one of claims 1 to 6, wherein the tip end portion of the bolt fitted into the groove comprises an unthreaded smooth cylinder.

8. The turbopump according to any one of claims 1 to 7, wherein the groove has an inlet comer having a chamfering or a tapered shape.

9. The turbopump according to any one of claims 1 to 8, wherein the tip end of the bolt has a corner having a chamfering or a tapered shape.

10. A turbopump comprising:
a main shaft configured to support an impeller;
a pump casing configured to house the impeller;
a mechanical seal provided in a portion where the main shaft passes through the pump casing; and
a pump-side shaft coupling, a motor-side shaft coupling, and a spacer which are configured to connect the main shaft and a motor shaft of a motor, the spacer being interposed between the pump-side shaft coupling and the motor-side shaft coupling;
wherein a female screw is formed in the main shaft in a direction perpendicular to an axial direction of the main shaft, a through hole is formed in the pump-side shaft coupling, and a bolt is inserted through the through hole and screwed into the female screw.

11. A turbopump comprising:
a main shaft configured to support an impeller;
a pump casing configured to house the impeller;
a mechanical seal provided in a portion where the main shaft passes through the pump casing; and
a pump-side shaft coupling, a motor-side shaft coupling, and a spacer which are configured to connect the main shaft and a motor shaft of a motor, the spacer being interposed between the pump-side shaft coupling and the motor-side shaft coupling;
wherein a through hole is formed in the main shaft in a direction perpendicular to an axial direction of the main shaft, a through hole is formed in the pump-side shaft coupling, and a pin is inserted through both the through holes.

12. The turbopump according to any one of claims 1 to 11, wherein a key is interposed between the pump-side shaft coupling and the main shaft.

13. The turbopump according to any one of claims 1 to 12, wherein a key is interposed between the motor-side shaft coupling and the motor shaft.

14. The turbopump according to claim 12 or 13, wherein a female screw is formed in at least one of the pump-side shaft coupling and the motor-side shaft coupling at a position corresponding to the key, and a bolt is screwed into the female screw to bring a tip end of the bolt into contact with the key.

15. The turbopump according to any one of claims 1 to 14, wherein a retaining ring for positioning the pump-side shaft coupling is mounted on the main shaft.

16. The turbopump according to any one of claims 1 to 14, wherein a dual-split ring for positioning the pump-side shaft coupling is mounted on the main shaft, and a retaining ring is fitted over a cylindrical portion of the pump-side shaft coupling and the dual-split ring.

17. The turbopump according to claim 16, wherein a female screw is formed in the cylindrical portion of the pump-side shaft coupling in a direction perpendicular to an axial direction of the main shaft, a through hole is formed in the retaining ring, and a bolt is inserted through the through hole and screwed into the female screw.

18. The turbopump according to any one of claims 1 to 17, wherein a step is formed in an inner circumferential portion of the pump-side shaft coupling, a plate is placed on the step, and a bolt extending in an axial direction of the main shaft is inserted through a through hole formed in the plate and is screwed into a female screw formed in an upper end portion of the main shaft.

19. The turbopump according to any one of claims 1 to 18, wherein fit portions of at least one of the pump-side shaft coupling and the motor-side shaft coupling, and the spacer are formed inside the radially outermost portions of the at least one of the pump-side shaft coupling and the motor-side shaft coupling, and the spacer.

20. The turbopump according to any one of claims 1 to 19, wherein when the mechanical seal is replaced, a fastener having a screw which interconnects the spacer and the pump-side shaft coupling is unfastened to allow a rotor including the impeller, the main shaft, and the pump-side shaft coupling to drop, and after replacement of the mechanical seal, the fastener is fastened to lift the rotor back to a normal position of the rotor.
